# EUROPEAN PATENT APPLICATION

(11) **EP 4 502 437 A1**
(43) Date of publication of application: **05.02.2025**
(21) Application number: 23778157.0
(22) Date of filing: 28.03.2023
(51) Int. Cl.: F16K 27/06, F16K 5/06

(54) **CONTROL VALVE AND MANUFACTURING METHOD THEREFOR**

(30) Priority: 31.03.2022 CN 202210333693; 31.03.2022 CN 202220733494 U; 21.06.2022 CN 202210704038; 21.06.2022 CN 202221573072 U
(71) Applicant: Zhejiang Sanhua Commercial Refrigeration Controls Co., Ltd, Shaoxing City, Zhejiang Province 312500 (CN)
(72) Inventor: WANG, Taixing, Shaoxing, Zhejiang 312500 (CN)
(74) Representative: Maikowski & Ninnemann Patentanwälte Partnerschaft mbB
(86) International application number: PCT/CN2023/084264
(87) International publication number: WO 2023/185792

(57) **Abstract**

A control valve and a manufacturing method therefor. The control valve comprises a housing (1), a first valve seat (2), and a first connecting pipe (4). The first valve seat (2) is formed by stamping or stretching a metal material. The first valve seat (2) comprises a first base (21), a first connecting portion (22), and a second connecting portion (23). The first base (21) is annular, and the first connecting portion (22) is tubular. The first connecting portion (22) extends from the outer edge of the first base (21) towards the housing (1). The second connecting portion (23) is tubular, and the second connecting portion (23) extends from the inner edge of the first base (21) towards the first connecting pipe (4). The housing (1) is fixedly connected to the first connecting portion (22), and the first connecting pipe (4) is fixedly connected to the second connecting portion (23). In the welding process of the control valve, it is convenient to control the matching position of the valve seat and the housing (1).

## Description

This application claims the priorities of the Chinese Patent Application No. 202210333693.0, titled "MANUFACTURING METHOD FOR CONTROL VALVE" and of the Chinese Patent Application No. 202220733494.4, titled "CONTROL VALVE", filed on March 31, 2022 with the China National Intellectual Property Administration, and the Chinese Patent Application No. 202210704038.1, titled "MANUFACTURING METHOD FOR CONTROL VALVE" and of the Chinese Patent Application No. 202221573072.1, titled "CONTROL VALVE", filed on June 21, 2022 with the China National Intellectual Property Administration, which are incorporated herein by reference in their entireties.

### FIELD

The present application relates to technical field of fluid control, and in particular to a manufacturing method for a control valve.

### BACKGROUND

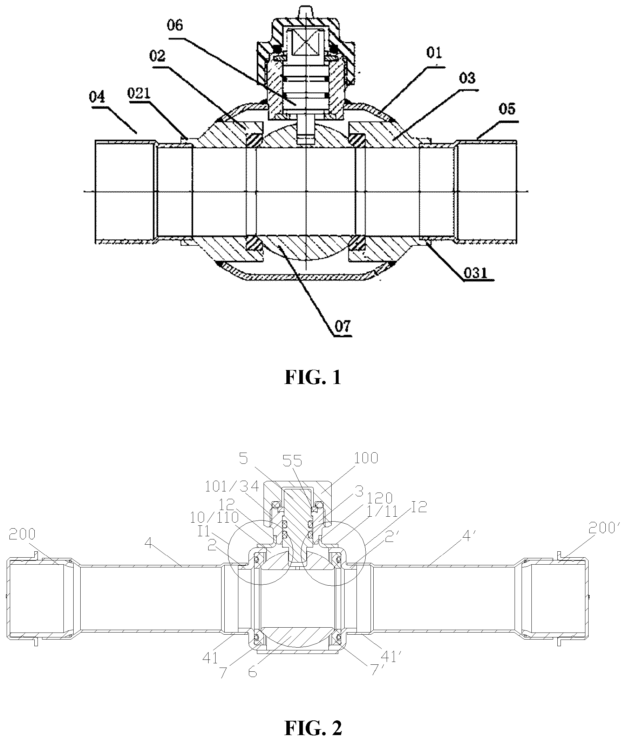

FIG. 1 shows a cross-sectional schematic diagram of a ball valve in conventional technology. As shown in FIG. 1, the ball valve includes a valve body tube 01, a left valve body 02, a right valve body 03, a left pipe 04, a right pipe 05, a valve rod 06 and a valve core 07. The valve body tube 01 is welded to the left valve body 02 and the right valve body 03. The valve rod 06 is used to cooperate with the keyway of the valve core 07, and the valve rod 06 can drive the valve core 07 to rotate circumferentially.

In this structure, a left mounting groove 021 is machined on the left valve body 02, a right mounting groove 031 is machined on the right valve body 03, the left pipe 04 is welded to the left mounting groove 021 for positioning, and the right pipe 05 is welded to the right mounting groove 031 for positioning. The valve body structure is relatively complex and inconvenient to machine.

In addition, in this structure, the matching position relationships of the left valve body 02, the right valve body 03 and the valve body tube 01 are related to the pre-tightening force of the left valve body 02, the right valve body 03 applied on the valve core 07, which may affect the rotational torque of the valve rod 06 applied on the valve core 07.

### SUMMARY

The purpose of the present application is to provide a control valve, which includes a housing, a first valve seat and a first connecting pipe. The first valve seat is formed by stamping or stretching a metal. The first valve seat includes a first base, a first connecting portion and a second connecting portion. The first base is annular, the first connecting portion is tubular, the first connecting portion extends from an outer edge of the first base toward the housing, the second connecting portion is tubular, the second connecting portion extends from the inner edge of the first base toward the first connecting pipe side, the housing is fixedly connected to the first connecting portion, and the first connecting pipe is fixedly connected to the second connecting portion.

The control valve provided in the present application includes the housing, the first valve seat and the first connecting pipe. The first valve seat is formed by stamping or stretching a metal, including the first connecting portion and the second connecting portion. The housing is fixedly connected to the first connecting portion, and the first connecting pipe is fixedly connected to the second connecting portion. Compared with the conventional technology, the first valve seat structure of the present application is simple.

The purpose of the present invention is to provide a method for manufacturing a control valve, including:
using steel to separately process and prepare a housing, a first valve seat, and a second valve seat, wherein the first valve seat comprises a first base, a first connecting portion, and a second connecting portion, wherein the first base is annular, the first connecting portion is tubular, the second connecting portion is tubular, the first connecting portion and the second connecting portion are located on different sides of the first base, and an inner diameter of the first connecting portion is larger than an outer diameter of the second connecting portion; the second valve seat includes a second base, a third connecting portion, and a fourth connecting portion, wherein the second base is annular, the third connecting portion is tubular, and the fourth connecting portion is tubular, the third connecting portion and the fourth connecting portion are located on different sides of the second base part, and an inner diameter of the third connecting portion is larger than an outer diameter of the fourth connecting portion;
providing a first connecting pipe and a second connecting pipe, assembling the first valve seat connecting pipe assembly: welding and fixing the first connecting portion to the first connecting pipe; assembling the second valve seat connecting pipe assembly: welding and fixing the third connecting portion to the second connecting pipe;
assembling the housing, the first valve seat connecting pipe assembly, and the second valve seat connecting pipe assembly: welding and fixing the second connecting portion to the housing; welding and fixing the fourth connecting portion to the housing.

The manufacturing method of the control valve provided by the present invention welds and fixes the first connecting portion to the first connecting pipe as the first valve seat connecting pipe assembly, welds and fixes the third connecting portion to the second connecting pipe as the second valve seat connecting pipe assembly, and assembles the housing, the first valve seat connecting pipe assembly, and the second valve seat connecting pipe. This solution facilitates the control of the matching position of the first valve seat, the second valve seat, and the housing during welding.

### BRIEF DESCRIPTION OF THE DRAWINGS

FIG. 1: A cross-sectional schematic diagram of a control valve in conventional technology;
FIG. 2: A cross-sectional schematic diagram of a control valve provided by the application;
FIG. 3A: A partial enlarged schematic diagram of I1 in FIG. 2;
FIG. 3B: A partial enlarged schematic diagram of 12 in FIG. 2;
FIG. 4: A three-dimensional diagram of a first valve seat in FIG. 2;
FIG. 5: A three-dimensional diagram of a second valve seat in FIG. 2;
FIG. 6: A schematic diagram of assembling a valve seat pipe assembly A;
FIG. 7: A schematic diagram of assembling a first assembly part D;
FIG. 8: A schematic diagram of assembling a stop ring, a joint and a housing;
FIG. 9: A schematic diagram of assembling a third assembly part C;
FIG. 10: A schematic diagram of the cross-sectional diagram of the third assembly part C;
FIG. 11: A schematic diagram of the assembly of the third assembly part C with the first assembly D and a second assembly part E,

In FIGS. 2 to 11:
1-housing, 10-valve cavity;
11-main body, 110-inner cavity of main body;
12-protrusion, 120-inner cavity of protrusion;
2-first valve seat, 21-first base, 211-outer wall of first base;
22-first connecting portion, 23-second connecting portion;
231-convex part, 24-inner step;
20-groove;
2'-second valve seat, 21'-second base, 211'-outer wall of second base;
22'-third connecting portion, 23'-fourth connecting portion;
3-connector, 30-through hole;
31-upper step, 32-lower step;
33-outer step, 331-step surface of outer step;
332-step wall of outer step, 34-external thread 4-first pipe, 41-first matching section;
4'-second pipe, 41'-second matching section; 5-valve rod, 51-cylindrical part; 52-first key part, 53-second key part; 54-valve rod step part; 6-valve core, 60-groove; 7-first sealing gasket; 70-first accommodating groove, 71-chamfered part; 7'-second sealing gasket, 70'-second accommodating groove; 8-stop ring, 80-matching hole; 9-first sealing ring, 9'-second sealing ring; 100-valve bonnet, 101-internal thread part; 200-first copper bushing, 200'-second copper bushing; A-first valve seat connecting pipe assembly, B-second valve seat connecting pipe assembly, C-third assembly part; D-first assembly part, E-second assembly part

### DETAILED DESCRIPTION OF THE EMBODIMENTS

In order to enable those skilled in the technical field to better understand the technical solution of the application, the application is further described in detail below in conjunction with drawings and specific embodiments.

It should be noted here that directional words such as upper and lower herein are defined by the positions of the parts in FIG. 2 and the parts relative to each other, which are just for the clarity and convenience of expressing the technical solution. It should be understood that the directional words used herein should not limit the scope of protection requested by this application.

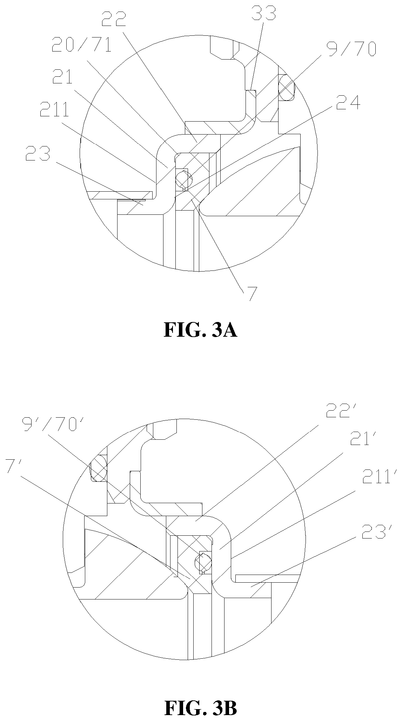

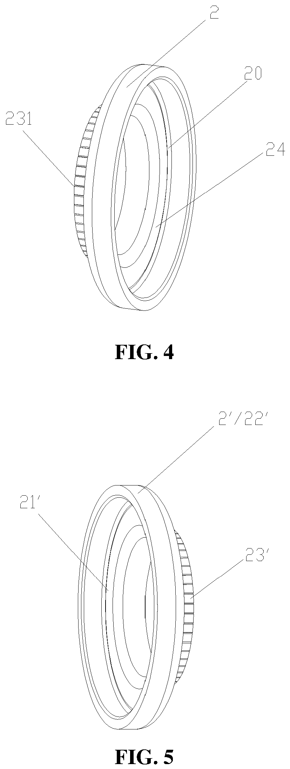

Referring to FIGs 2, 3A and 4, FIG. 2 is a cross-sectional schematic diagram of a control valve provided by the application; FIG. 3A is a partial enlarged schematic diagram of I1 in FIG. 2; FIG. 4 is a three-dimensional diagram of a first valve seat in FIG. 2.

As shown in the figures, the control valve includes a housing 1, a first valve seat 2, a connector 3, a first pipe 4, and a valve rod 5. The first valve seat 2 is formed by stamping or stretching a metal. The first valve seat 2 is specifically made by stamping or stretching a metal plate. The first valve seat 2 includes a first base 21, a first connecting portion 22, and a second connecting portion 23. The first base 21 is of an annular shape, the first connecting portion 22 is of a tubular shape, and the first connecting portion 22 is formed by an outer edge of the first base 21 extending towards the housing 1. The second connecting portion 23 is of a tubular shape, and the second connecting portion 23 is formed by an inner edge of the first base 21 extending towards the first connecting pipe 4, that is, the first connecting portion 22 and the second connecting portion 23 are located on different sides of the first base 21. Further, the first connecting portion 22 and the second connecting portion 23 are coaxially arranged, that is, a central axis of the first connecting portion 22 coincides with a central axis of the second connecting portion 23, and an inner diameter of the first connecting portion 22 is larger than an outer diameter of the second connecting portion 23. The housing 1 is fixedly connected to the first connecting portion 22 by welding or threading, and the first connecting pipe 4 is fixedly connected to the second connecting portion 23 by welding or threading. Specifically, the housing 1 is fixed to the first connecting portion 22 by laser welding, and the first pipe 4 is fixed to the second connecting portion 23 by furnace welding.

In this embodiment, the first valve seat 2 is made by stamping or stretching of a metal plate. The first valve seat 2 includes a first connecting portion 22 and a second connecting portion 23, the housing 1 is fixedly connected to the first connecting portion 22, and the first pipe 4 is fixedly connected to the second connecting portion 23. Compared with the conventional technology, the valve seat structure of this embodiment is simple, does not require machining, and is easy to process.

The control valve also includes a valve core 6 and a first sealing gasket 7. The valve core 6 is roughly of a spherical shape and is located in the valve cavity 10 of the control valve. The first valve seat 2 includes an inner step portion 24 with a step surface facing the valve core 6, and the inner step portion 24 includes a first base 21 and a first connecting portion 22. The first sealing gasket 7 is placed on the inner step portion 24, and the first sealing gasket 7 abuts against the valve core 6 to support the valve core 6. The inner step portion 24 formed by stamping or stretching of the first valve seat 2 supports the first sealing gasket 7 and the valve core 6, and has a simple structure.

As a further embodiment, the inner step portion 24 has a groove 20, which is located at a connection between the first base 21 and the first connecting portion 22 and is formed by stamping. The groove 20 has an inclined angle, so that the first sealing gasket 7 can reliably match with the first valve seat 2, thereby improving the matching accuracy of the first sealing gasket 7 and the first valve seat 2. And/or, the first sealing gasket 7 includes a chamfered portion 71, the chamfered surface of the chamfered portion 71 faces the connection between the first base 21 and the first connecting portion 22, and the chamfered portion 71 can also enable the first sealing gasket 7 to reliably match with the first valve seat 2.

The first sealing gasket 7 also includes a first accommodating groove 70, the opening of which faces the first base 21. The control valve also includes a first sealing ring 9, which is made of a rubber material and has elasticity. The first sealing ring 9 is located in the first accommodating groove 70, and the first sealing ring 9 abuts against the groove wall forming the first accommodating groove 70, and the first sealing ring 9 abuts against the first base 21, that is, the first sealing ring 9 is elastically located between the groove wall of the first accommodating groove 70 and the first base 21.

Further, the first connecting pipe 4 includes a first matching section 41, and the first matching section 41 is mounted outside the second connecting portion 23. The second connecting portion 23 includes a convex portion 231, which is formed by a wire drawing process, and the convex portion 231 is located on an outer peripheral surface of the second connecting portion 23. The first matching section 41 is welded and fixed to the convex portion 231 after matching. By providing the convex portion 231, it is convenient for solder to flow through the convex portion 231 between the first matching section 41 and the second connecting portion 23 during welding, thereby improving the welding reliability of the first connecting pipe 4 and the first valve seat 2.

The housing 1 is formed by stamping or stretching of a stainless steel pipe, and includes a main body 11 and a protrusion 12. The protrusion 12 protrudes from a circumferential outer wall of the main body 11. The main body 11 is of a cylindrical shape, and the protrusion 12 is of an annular shape. The first connecting portion 22 is at least partially located in the inner cavity 110 of the main body. An outer peripheral wall of the first connecting portion 22 is in clearance fit with an inner wall of the housing 1. The main body 11 and the first connecting portion 22 are welded and fixed. A joint 3 includes an outer step part 33 with a step surface facing downward (toward the valve core 3). The protrusion 12 is contacted and positioned with the step surface of the outer step part 33. The step wall of the outer step part 33 is located in the inner cavity 120 of the protrusion. The protrusion 12 is welded and fixed with the outer step part 33. By arranging the outer step part 33 on the joint 3, the protrusion 12 is contacted with the step surface of the outer step part 33 to achieve positioning, thereby improving the positioning accuracy of the joint 3 and the housing 1, and facilitating the welding of the joint 3 and the housing 1.

In this solution, the joint 3 is roughly of an annular shape and is formed by lathe machining of stainless steel profiles. The connector 3 includes a through hole 30, the valve rod 5 is inserted into the through hole 30, the lower section of the valve rod 5 extends into the valve cavity 10 of the control valve and is connected to a keyway of the valve core 6, and the valve rod 5 can drive the valve core 6 to rotate to open or close the control valve or adjust the flow of the control valve.

As a further technical solution, the connector 3 includes a lower step portion 32 which is integrally formed, and the valve rod 5 includes a valve rod step portion 54 with the step surface facing upward, and the valve rod step portion 54 can abut against the lower step portion 32 to limit the valve rod 5 from moving upward along a longitudinal direction of the control valve. In this solution, the valve rod 5 is an inverted structure, and the lower step portion 32 can reliably limit the valve rod 5; and the lower step portion 32 is arranged on the connector 3, and the valve rod 5 can achieve a reliable limiting without providing a flange portion protruding outward, which can reduce a material cost of the valve rod 5.

The housing 1, the first valve seat 2 and the first connecting pipe 4 are made of stainless steel. In this solution, the housing 1 and the joint 3 are fixed by laser welding, the first valve seat 2 and the first connecting pipe 4 are fixed into an assembly by furnace welding, and then the first valve seat 2 is fixed to the housing 1 by laser welding.

Referring to FIG. 5, FIG. 5 is a three-dimensional view of the second valve seat in FIG. 2.

As shown in FIGS. 2 and 5, the control valve also includes a second valve seat 2', a second connecting pipe 4' and a second sealing gasket 7'. The second valve seat 2' has the same structure as the first valve seat 2, is made of a metal sheet by stamping or stretching, and is symmetrically arranged relative to the central axis of the protrusion 12 of the housing 1. Specifically, the second valve seat 2' includes a second base 21', a third connecting portion 22' and a fourth connecting portion 23', the second base 21' is of an annular shape, the third connecting portion 22' is of a tubular shape, the third connecting portion 22' extends from the outer edge of the second base 21' toward the housing 1, and the fourth connecting portion 23' is of a tubular shape, and the fourth connecting portion 23' extends from the inner edge of the second base 21' toward the second pipe 4'. The housing 1 is connected to the third connecting portion 22' by welding or threading, and the second pipe 4' is connected to the fourth connecting portion 23' by welding or threading. With this arrangement, the structure of the second valve seat 2' is simple.

The second pipe 4' includes a second matching section 41', the second matching section 41' is mounted outside the fourth connecting portion 23', and the second matching section 41' is welded and fixed to the fourth connecting portion 23'.

The second sealing gasket 7' has the same structure as the first sealing gasket 7 and is symmetrically arranged relative to the central axis of the protrusion 12. The valve core 6 is located between the first sealing gasket 7 and the second sealing gasket 7', the second valve seat 2' supports the second sealing gasket 7', and the second sealing gasket 7' supports the valve core 6.

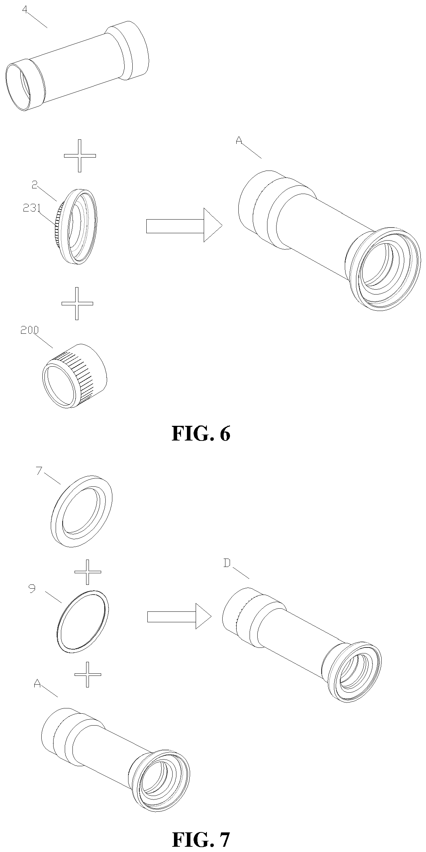

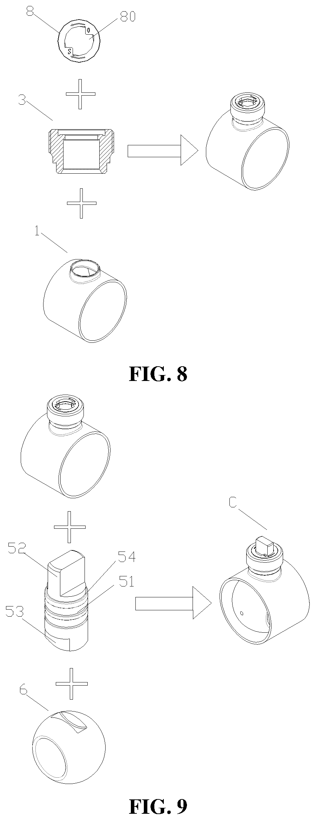

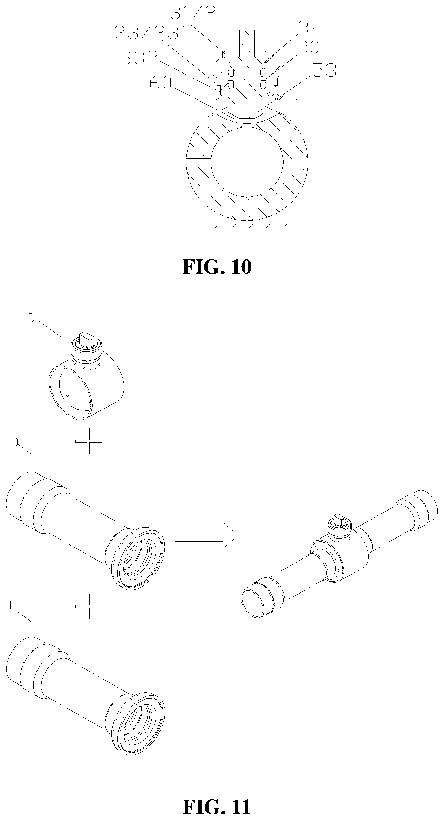

The present invention also provides a method for manufacturing a control valve. Referring to FIGS. 2, 3A, 3B, and 6 to 11, FIG. 3B is a partial enlarged schematic diagram of I2 in FIG. 2; FIG. 6 is an assembly schematic diagram of the first valve seat connecting pipe assembly A; FIG. 7 is an assembly schematic diagram of the first assembly part D; FIG. 8 is an assembly schematic diagram of the stop ring, the joint and the housing; FIG. 9 is an assembly schematic diagram of the third assembly part C; FIG. 10 is a cross-sectional schematic diagram of the third assembly part C; FIG. 11 is an assembly schematic diagram of the third assembly part C with the first assembly part D and the second assembly part E.

As shown in the figures, the specific manufacturing process of the above control valve is as follows.

Steel is used to process and prepare the housing 1, and the housing 1 includes a body 11 and a protruding portion 12. Specifically, the stainless steel pipe is cut into a housing blank, and then the housing blank is stamped and flanged to produce the protruding portion 12. Of course, it can also be made of stainless steel sheet. First, the stainless steel sheet needs to be rolled into a tube, and the subsequent process is the same as the tube.

Steel is used to process and prepare the first valve seat 2, the second valve seat 2', the first pipe 4, and the second pipe 4'. The first valve seat 2 and the second valve seat 2' are made of stainless steel sheet by stamping, and the first valve seat 2 and the second valve seat 2' have the same structure. Specifically, the stainless steel sheet is punched out of a "Z"-shaped structure as the first valve seat 2. The first valve seat 2 includes the first base 21, the first connecting portion 22 and the second connecting portion 23. The first base 21 is of an annular shape, the first connecting portion 22 is of a tubular shape, and the first connecting portion 22 extends from the outer edge of the first base 21 to one side. The second connecting portion 23 is of a tubular shape, and the second connecting portion 23 extends from the inner edge of the first base 21 to the other side, that is, the first connecting portion 22 and the second connecting portion 23 are located on different sides of the first base 21, and the inner diameter of the first connecting portion 22 is larger than the outer diameter of the second connecting portion 23. The first base 21 and the first connecting portion 22 form an inner step 24.

A "Z"-shaped structure is punched out of a stainless steel plate as the second valve seat 2'. The second valve seat 2' includes the second base portion 21', the third connecting portion 22' and the fourth connecting portion 23'. The second base portion 21' is of an annular shape, the third connecting portion 22' is of a tubular shape, the third connecting portion 22' extends from the outer edge of the second base portion 21' toward one side, the fourth connecting portion 23' is of a tubular shape, and the fourth connecting portion 23' extends from the inner edge of the second base portion 21' toward the other side, that is, the third connecting portion 22' and the fourth connecting portion 23' are located on different sides of the second base portion 21', and the inner diameter of the third connecting portion 22' is larger than the outer diameter of the fourth connecting portion 23'.

In this solution, the first valve seat 2 and the second valve seat 2' do not need to be machined after stamping, which can reduce a processing cost of the first valve seat 2 and the second valve seat 2'.

The first pipe 4 and the second pipe 4' are specifically made of stainless steel pipes. One end of the specific first pipe 4 forms a first matching section 41 through a flaring process. In the actual production process, in order to facilitate matching and welding with the customer's copper pipe, the other end of the first pipe 4 is used to weld a copper bushing, which can be covered or embedded in the other end of the first pipe 4. The second pipe 4' has the same structure as the first pipe 4 and is not repeated.

A first sealing gasket 7 and a second sealing gasket 7' are provided, and the first sealing gasket 7 and the second sealing gasket 7' are made of PTFE, PEK, high-temperature nylon and other materials.

Steel is used to process and prepare the joint 3, which is specifically made of stainless steel profiles. When the joint 3 is used as a part, it is roughly hollow cylindrical and includes a through hole 30. The joint 3 includes an upper step portion 31 with a step surface facing upward, a lower step portion 32 with a step surface facing downward, and an outer step portion 33 with a step surface facing downward located on periphery. The outer step portion 33 is located in a lower section of the joint 3, and an outer peripheral wall of an upper section of the joint 3 is processed with an external thread portion 33. A stop ring 8 is provided, and the stop ring 8 is stamped from a stainless steel plate and includes a matching hole 80.

Steel is used to process and prepare the valve rod 5, and the valve rod 5 is of a rod shape and is specifically made by machining a stainless steel bar. An extension direction of the first base 21 is consistent with a length direction of the valve rod 5, and an extension direction of the second base 21' is consistent with the length direction of the valve rod 5. The valve rod 5 includes a cylindrical portion 51, a first key portion 52 and a second key portion 53, the first key portion 52 is located on an upper portion of the cylindrical portion 51, and the second key portion 53 is located on a lower portion of the cylindrical portion 51. The cylindrical portion 51 includes a valve rod step portion 54 with a step surface facing upward.

Steel is used to process and prepare a valve bonnet 100. The valve bonnet 100 is specifically made of stainless steel, and an inner circumferential wall of the valve bonnet 100 is machined with an internal threaded portion 101.

The first valve seat 2, the first connecting pipe 4 and the first copper bushing 200 are fixedly connected by furnace brazing as a first valve seat connecting pipe assembly A. Specifically, the first connecting portion 22 of the first valve seat 2 at least partially extends into the first matching section 41 of the first connecting pipe 4, and the first copper bushing 200 is covered or embedded in the other end of the first connecting pipe 4, and the first valve seat 2, the first connecting pipe 4 and the first copper bushing 200 are fixed by furnace brazing.

The second valve seat 2', the second connecting pipe 4' and the second copper bushing 200' are fixedly connected by furnace brazing as a second valve seat connecting pipe assembly B. Specifically, the third connecting portion 22' of the second valve seat 2' at least partially extends into the second matching section 41' of the second connecting pipe 4', and the second copper bushing 200' is covered or embedded in the other end of the second connecting pipe 4', and the three are fixed by furnace brazing. It should be noted that, since the first valve seat 2 and the second valve seat 2' have the same structure, the first pipe 4 and the second pipe 4' have the same structure, and the first copper bushing 200 and the second copper bushing 200' have the same structure, the first valve seat connecting pipe assembly A and the second valve seat connecting pipe assembly B can be interchanged.

The lower section of the joint 3 is extended into the inner cavity 120 of the protruding portion, so that a step surface 331 of the outer step portion 33 contacts the protruding portion 12, and the step wall 332 of the outer step portion 33 is located in the inner cavity 120 of the protruding portion, and the joint 3 is fixedly connected to the housing 1 by laser welding; the stop ring 8 is placed on the upper step portion 31 of the joint 3, and the stop ring 8 is fixedly connected to the joint 3 by laser welding.

The valve rod 5 is assembled, specifically, the valve rod 5 is installed from an opening end of the housing 1 at one side, so that the valve rod 5 passes through the through hole 30 of the joint 3, and the valve rod step portion 54 can abut against the lower step portion 32 of the joint 3 to limit the valve rod 5 from moving longitudinally upward and coming out. And the first key portion 52 extends out of the connector 3, which is convenient for external tool wrenches to rotate.

A valve core 6 is provided, which is made of stainless steel. When the valve core 6 is assembled, for easy installation, the valve rod 5 is rotated until an extension direction of the second key portion 53 is consistent with an axial direction of the main body 11, and then the valve core 6 is installed from the opening end of the housing 1 at one side, so that the second key portion 53 and the groove 60 of the valve core 6 are embedded to form a third assembly part C, that is, the third assembly part C includes the housing 1, the connector 3, the stop ring 8, the valve rod 5 and the valve core 6.

The housing 1, the first valve seat connecting pipe assembly A, and the second valve seat connecting pipe assembly B are assembled. Specifically, the second connecting portion 23 of the first valve seat 2 at least partially extends into the housing 1, and the second connecting portion 23 is welded and fixed to the housing 1; the fourth connecting portion 23' of the second valve seat 2' at least partially extends into the housing 1, and the fourth connecting portion 23' is welded and fixed to the housing 1.

Compared with the conventional technology, this solution is convenient for controlling the matching position accuracy of the first valve seat, the second valve seat and the housing during the welding process, so that the valve core is subjected to the same pre-tightening force of the first valve seat and the second valve seat, thereby improving the consistency of the rotation torque of the valve rod on the valve core.

Further, the control valve also includes a first sealing ring 9 and a second sealing ring 9', the first sealing ring 9 and the second sealing ring 9' are made of rubber material, the first sealing gasket 7 is provided with a first accommodating groove 70, an opening of the first accommodating groove 70 faces the first base 21, and before the second connecting portion 23 of the first valve seat 2 is welded to the housing 1, the first sealing ring 9 is placed in the first accommodating groove 70 and assembled as a component with the first valve seat connecting pipe assembly A to form a first assembly part D. Specifically, the first sealing gasket 7 is placed in the inner step portion 24 of the first valve seat 2, so that the outer peripheral wall of the first sealing gasket 7 is tightly matched with the inner peripheral wall of the second connecting portion 23.

Similarly, the second sealing gasket 7' has the same structure as the first sealing gasket 7, and the second sealing gasket 7' is provided with a second accommodating groove 70'. Before the fourth connecting portion 23' of the second valve seat 2' is welded to the housing 1, the second sealing ring 9' is placed in the second accommodating groove 70' and assembled with the second valve seat connecting pipe assembly B as a component to form a second assembly part E, so that the outer peripheral wall of the second sealing gasket 7' is tightly matched with the inner peripheral wall of the fourth connecting portion 23'. The specific assembly method is the same as the assembly method of the first assembly part D.

During the assembly process of the first assembly part D, the second assembly part E, and the third assembly part C, the joint 3 of the third assembly part C is positioned by the tooling, and the first assembly part D and the second assembly part E are clamped by a synchronous actuating mechanism (such as a servo, etc.). The first assembly part D is clamped with the outer wall 211 of the first base 21 of the first valve seat 2 as a positioning surface, and the second assembly part E is clamped with the outer wall 211' of the second base 21' of the second valve seat 2' as a positioning surface. After clamping, the first assembly part D and the second assembly part E are simultaneously moved towards the valve core 6 by a preset distance. The first valve seat 2 partially extends into the inner cavity 110 of the main body, the first sealing gasket 7 abuts against the valve core 6, and the second valve seat 2' partially extends into the inner cavity 110 of the main body, so that the second sealing gasket 7' abuts against the valve core 6 to achieve pre-positioning. After pre-positioning, the first valve seat 2 is fixedly connected to the housing 1 by laser welding, and the second valve seat 2' is fixedly connected to the housing 1 by laser welding. It is conceivable that the first valve seat 2 and the second valve seat 2' can also be welded to the housing 1 at the same time by laser. In this way, the assembly accuracy of the control valve can be improved, the consistency of the rotation torque of the valve rod on the valve core can be improved, and the internal leakage performance of the control valve can be improved.

It is conceivable that the housing 1 and the first valve seat 2 and the second valve seat 2' can also be fixed by welding methods such as argon arc welding and gas shielded welding.

Then, the valve bonnet 100 is screwed into the joint 3 to form the control valve, and the valve bonnet 100 is fixedly connected to the joint 3 by screwing the external threaded portion 34 with the internal threaded portion 101.

As a specific implementation design, as shown in FIG. 6, when the first valve seat 2 is prepared, the first connecting portion 22 is formed into the convex portion 231 by a wire drawing process, and the first matching section 41 is matched with the convex portion 231 for welding. Thus, compared with the above embodiment, the convex portion 231 in this solution is conducive to the flow of solder, which can improve the welding reliability of the first valve seat 2 and the first connecting pipe 4.

It can be imagined that the connection structure of the second valve seat 2' and the second connecting pipe 4' can also adopt the connection structure of the first valve seat 2 and the first connecting pipe 4, which also has the corresponding technical effect, and is not repeated here.

Further, as shown in FIG. 2 and FIG. 3A, the first sealing gasket 7 includes a chamfered portion 71, and the chamfered portion 71 faces the connection between the first base 21 and the second connecting portion 23, so that the R angle at the connection between the first base 21 and the second connecting portion 23 can be avoided, and the matching reliability between the first valve seat 2 and the first sealing gasket 7 can be ensured.

Alternatively, the first valve seat 2 is formed with a groove 20 by stamping, and the groove 20 is located at the connection between the first base 21 and the second connecting portion 23, which can also ensure the matching reliability between the first valve seat 2 and the first sealing gasket 7.

It can be imagined that the matching structure of the second valve seat 2' and the second sealing gasket 7' can also adopt the matching structure of the first valve seat 2 and the first sealing gasket 7, which also has the corresponding technical effect, and is not repeated here.

In the manufacturing method of the control valve of this embodiment, each component is basically made of stainless steel material, which meets the requirements of the lead content of control products in today's society; the first copper bushing, the first connecting pipe and the first valve seat are fixed by one-time welding, the process is simple, and the processing is convenient; the connection is fixed by furnace brazing and laser welding, and no pickling is required, and the production process is clean and environmentally friendly.

The principles and implementation methods of the present invention are described herein using specific examples. The description of the above embodiments is only used to help understand the method and core ideas of the present invention. It should be pointed out that for those skilled in this technical field, several improvements and modifications can be made to the present invention without departing from the principles of the present invention, and these improvements and modifications also fall within the scope of protection of the claims of the present invention.

## Claims

1. A control valve, comprising:
a housing,
a first valve seat, and
a first connecting pipe,
wherein the first valve seat is formed by stamping or stretching a metal, the first valve seat comprises a first base, a first connecting portion and a second connecting portion, the first base is annular, the first connecting portion is tubular, the first connecting portion extends from an outer edge of the first base towards the housing, the second connecting portion is tubular, the second connecting portion extends from an inner edge of the first base towards the first connecting pipe, the housing is fixedly connected to the first connecting portion, and the first connecting pipe is fixedly connected to the second connecting portion.

2. The control valve according to claim 1, wherein the first connecting portion and the second connecting portion are coaxially arranged, and an inner diameter of the first connecting portion is larger than an outer diameter of the second connecting portion.

3. The control valve according to claim 1, wherein the control valve further comprises a valve core and a first sealing gasket, the valve core is located in an inner cavity of the control valve, the first valve seat comprises an inner step portion with a step surface facing the valve core, the inner step portion comprises the first base and the first connecting portion, the first sealing gasket is placed in the inner step portion, and the first sealing gasket supports the valve core.

4. The control valve according to claim 3, wherein the inner step portion has a groove, and the groove is located at a connection between the first base and the first connecting portion.

5. The control valve according to claim 3, wherein the first sealing gasket comprises a chamfered portion, and a chamfered surface of the chamfered portion faces a connection between the first base and the first connecting portion.

6. The control valve according to claim 5, wherein the first sealing gasket further comprises a first accommodating groove, an opening of the first accommodating groove faces the first base, and the control valve further comprises a first sealing ring, the first sealing ring is located in the first accommodating groove, the first sealing ring abuts against the groove wall forming the first accommodating groove, and the first sealing ring abuts against the first base.

7. The control valve according to claim 1, wherein the first connecting pipe comprises a first matching section, the first matching section is mounted outside the second connecting portion, the second connecting portion comprises a convex portion, the convex portion is located on an outer peripheral surface of the second connecting portion, and the first matching section is welded and fixed to the convex portion.

8. The control valve according to any one of claims 1 to 7, wherein the housing comprises a body and a protrusion, the protrusion protrudes from a circumferential outer wall of the body, the body is cylindrical, the protrusion is annular, the body is welded and fixed to the first connecting portion, an outer peripheral wall of the first connecting portion is in clearance fit with an inner wall of the housing, the control valve further comprises a joint, the joint comprises an outer step part with a step surface facing downward, the protrusion contacts the step surface of the outer step part, the step wall of the outer step part is located in an inner cavity of the protrusion, and the protrusion is welded and fixed to the outer step part.

9. The control valve according to claim 8, wherein control valve further comprises a valve core and a valve rod, the joint comprises a through hole, the valve rod passes through the through hole, the valve rod is connected to a keyway of the valve core, the joint comprises a lower step part which is integrally formed, the valve rod comprises a valve rod step part with a step surface facing upward, and the valve rod step part abuts against the lower step part to limit the valve rod from moving upward along a longitudinal direction of the control valve.

10. The control valve according to any one of claims 1 to 7, wherein the housing, the first valve seat and the first connecting pipe are made of stainless steel, the first valve seat and the first connecting pipe are fixed by furnace welding, and the housing and the first valve seat are fixed by laser welding.

11. The control valve according to claim 1, wherein the control valve further comprises a second valve seat and a second connecting pipe, the second valve seat is formed by stamping or stretching a metal plate, the second valve seat comprises a second base, a third connecting portion and a fourth connecting portion, the second base is annular, the third connecting portion is tubular, the third connecting portion extends from an outer edge of the second base toward the housing, the fourth connecting portion is tubular, the fourth connecting portion extends from an inner edge of the second base towards the second connecting pipe, the housing and the third connecting portion are welded and fixed, the second connecting pipe comprises a second matching section, the second matching section is mounted outside the fourth connecting portion, and the second matching section is welded and fixed to the fourth connecting portion.

12. A method for manufacturing a control valve, comprising:
using steel to separately process and prepare a housing, a first valve seat, and a second valve seat, wherein the first valve seat comprises a first base, a first connecting portion, and a second connecting portion, the first base is annular, the first connecting portion is tubular, the second connecting portion is tubular, the first connecting portion and the second connecting portion are located on different sides of the first base, and an inner diameter of the first connecting portion is larger than an outer diameter of the second connecting portion; the second valve seat comprises a second base, a third connecting portion, and a fourth connecting portion, wherein the second base is annular, the third connecting portion is tubular, and the fourth connecting portion is tubular, the third connecting portion and the fourth connecting portion are located on different sides of the second base part, and the inner diameter of the third connecting portion is larger than the outer diameter of the fourth connecting portion;
providing a first connecting pipe and a second connecting pipe, assembling the first valve seat connecting pipe assembly: welding and fixing the first connecting portion to the first connecting pipe; assembling the second valve seat connecting pipe assembly: welding and fixing the third connecting portion to the second connecting pipe;
assembling the housing, the first valve seat connecting pipe assembly, and the second valve seat connecting pipe assembly: welding and fixing the second connecting portion to the housing; welding and fixing the fourth connecting portion to the housing.

13. The manufacturing method of the control valve according to claim 12, wherein a first sealing gasket and a first sealing ring are provided, the first sealing gasket is provided with a first accommodating groove, before the second connecting portion is welded to the housing, the first sealing ring is placed in the first accommodating groove, the first sealing gasket and the first valve seat connecting pipe assembly are assembled as a first assembly part, so that an outer peripheral wall of the first sealing gasket is tightly matched with the inner peripheral wall of the second connecting portion, and the second connecting portion at least partially extends into the housing;
a second sealing gasket is provided, before the fourth connecting portion is welded to the housing, the second sealing gasket and the second valve seat connecting pipe assembly are assembled, so that an outer peripheral wall of the second sealing gasket is tightly matched with the inner peripheral wall of the fourth connecting portion, and the fourth connecting portion at least partially extends into the housing.

14. The manufacturing method of the control valve according to claim 13, wherein a second sealing ring is provided, the second sealing gasket is provided with a second accommodating groove, after the second sealing ring is placed in the second accommodating groove, the second sealing gasket and the second valve seat connecting pipe assembly are assembled to form a second assembly part.

15. The manufacturing method of the control valve according to claim 13, wherein the first sealing gasket comprises a chamfered portion, and the chamfered portion faces a connection between the first base and the second connecting portion;
or, the first valve seat is formed into a groove by stamping, and the groove is located at the connection between the first base and the second connecting portion.

16. The manufacturing method of the control valve according to any one of claims 12 to 15, comprising: using steel to separately process and prepare the housing, wherein the housing comprises a body and a protruding portion, and the protruding portion is made by stamping and flanging; the second connecting portion at least partially extends into an inner cavity of the body, and the body and the second connecting portion are fixed by laser welding.

17. The manufacturing method of the control valve according to claim 16, comprising: providing a stop ring, using steel to process and prepare a joint, wherein the joint comprises an upper step portion with a step surface facing upward and an outer step portion with a step surface facing downward, the stop ring is placed on the upper step portion, and the stop ring and the joint are fixed by laser welding; the joint portion extends into an inner cavity of the protruding portion so that the protruding portion contacts the step surface of the outer step portion, and the housing and the joint are fixed by laser welding.

18. The manufacturing method of the control valve according to claim 17, comprising: using steel to separately process and prepare the valve rod, an extension direction of the first base is consistent with a length direction of the valve rod, an extension direction of the second base is consistent with the length direction of the valve rod, the valve rod comprises a cylindrical portion, a first key portion located on an upper portion of the cylindrical portion and a second key portion located on a lower portion of the cylindrical portion, the first key portion and the cylindrical portion comprises a valve rod step portion, and the joint further comprises a lower step portion with the step surface facing downward,
before the second connecting portion is welded to the housing or the fourth connecting portion is welded to the housing, the valve rod is installed from an opening end of the housing at one side so that the valve rod passes through the through hole of the joint and so that the valve rod step portion abuts against the lower step portion; a valve core is provided, and the valve core is installed from the opening end of the housing at one side so that the second key portion is embedded in the groove of the valve core to form a third assembly part.

19. The manufacturing method of the control valve according to claim 18, wherein when the first valve seat, the second valve seat and the housing are welded, the joint of the third assembly part is positioned by a tool, and the first assembly part and the second assembly part are simultaneously moved toward the valve core by a preset distance through a synchronous actuating mechanism, so that the first valve seat portion extends into the inner cavity of the body portion, the first sealing gasket abuts against the valve core, and the second valve seat portion extends into the inner cavity of the body portion, and the second sealing gasket abuts against the valve core.

20. The manufacturing method of the control valve according to claim 19, wherein the outer peripheral wall of the joint comprises an external threaded portion; a valve bonnet is made by processing steel, and an inner peripheral wall of the valve bonnet comprises an internal threaded portion; the valve bonnet is screwed into the joint, and the valve bonnet and the joint are screwed and fixed by the internal threaded portion and the external threaded portion.
